Europäisches Patentamt

European Patent Office

Office européen des brevets

(19)

(11) Numéro de publication : **0 057 136**
**B1**

(12) **FASCICULE DE BREVET EUROPÉEN**

(45) Date de publication du fascicule du brevet :
10.09.86

(51) Int. Cl.⁴ : **B 21 D 22/14, G 05 B 19/42**

(21) Numéro de dépôt : 82400108.5

(22) Date de dépôt : 21.01.82

(54) Tour de repoussage perfectionné.

(30) Priorité : 26.01.81 FR 8101383

(43) Date de publication de la demande :
04.08.82 Bulletin 82/31

(45) Mention de la délivrance du brevet :
10.09.86 Bulletin 86/37

(84) Etats contractants désignés :
BE CH DE GB IT LI NL

(56) Documents cités :
DE-A- 2 008 204
DE-A- 2 457 504
DE-A- 2 802 165
DE-A- 2 934 658
FR-A- 2 217 741
FR-A- 2 256 788
GB-A- 1 325 872

(73) Titulaire : ETABLISSEMENTS RONDOLOTTI, Société
dite:
27 Avenue Gabriel Péri
F-94300 Vincennes (FR)

(72) Inventeur : Rolin, Guy
3 Rond Point Laurent Casanova
F-77500 Chelles (FR)
Inventeur : Rabizzoni, Jacques

décédé (FR)

(74) Mandataire : Moncheny, Michel et al
c/o Cabinet Lavoix 2 Place d'Estienne d'Orves
F-75441 Paris Cedex 09 (FR)

Jouve, 18, rue St-Denis, 75001 Paris, France

**Description**

La présente invention concerne la technique du repoussage ou du fluotournage consistant à obtenir des objets de révolution en plaquant un flan de métal sur une pièce de forme maintenue en rotation et présentant le profil intérieur de l'objet intérieur de l'objet à fabriquer.

La mise en œuvre de cette technique est réalisée sur des tours comportant un outil de travail qui est monté sur un chariot pouvant se déplacer selon deux mouvements perpendiculaires et qui en étant appuyé contre le métal du flan assure progressivement, généralement en plusieurs passes, l'obtention de la forme correcte de l'objet. Le mouvement longitudinal du chariot, c'est-à-dire celui qui travaille généralement parallèlement à la génératrice moyenne du mandrin rotatif est en général obtenu par un moteur hydraulique à vis et écrou ou analogue qui entraîne une coulisse double sur laquelle est montée la coulisse porte-molette. Celle-ci se déplace selon un mouvement transversal à la génératrice moyenne du mandrin rotatif et est provoqué généralement par un vérin hydraulique ou analogue.

Dans un premier type de tours antérieurs, ce vérin hydraulique de mouvement transversal est régulé en pression par l'intermédiaire d'une soupape de décharge connectée à l'orifice de poussée du vérin hydraulique.

Un tel tour présente des inconvénients qui sont liés au fait qu'il n'est pas possible de régler l'effort de poussée de la molette sur le métal en dessous d'une certaine limite définie par la valeur inférieure de la plage de tarage de la soupape de décharge. De plus, il faut tenir compte des frottements mécaniques de la coulisse porte-molette et de son vérin. Sur un tel tour, on peut donc difficilement travailler sur des métaux tendres, effectuer des finitions sur ces métaux, ou travailler sur des pièces minces, opérations pour lesquelles la poussée doit nécessairement être très faible. Bien entendu, il serait possible de modifier la plage de réglage de pression en changeant la soupape de décharge ou le ressort de tarage de celle-ci, mais on comprend qu'une telle mesure ne contribue pas à un maniement commode du tour.

Un autre type de tour utilisant un dispositif de copiage tel que celui décrit dans FR-A-2 416 767 apporte un perfectionnement au tour décrit ci-dessus grâce au fait que le vérin qui assure la poussée de la molette est commandé par une vanne asservie au profil d'un gabarit pour pouvoir déterminer le trajet de la molette au cours de plusieurs passes successives nécessaires pour obtenir l'objet. Ce document a servi de base pour l'élaboration du préambule des revendications 1 et 2.

Plus précisément, le gabarit est exploré par un palpeur qui actionne un capteur de mouvement dont le signal de sortie est envoyé sur une première entrée d'un amplificateur différentiel formant l'organe central de la boucle d'asservissement. La deuxième entrée de l'amplificateur reçoit un signal de consigne engendré par un générateur de signaux de consigne commutables correspondant chacun à une passe ou une série de passes de la molette. L'amplificateur envoie un signal de commande à la vanne asservie lorsqu'il est mis en état de déséquilibre par la variation du signal provenant du capteur.

Bien que ce dispositif de commande fonctionne de façon satisfaisante, il est néanmoins nécessaire pour les passes de finition avec un métal tendre de prévoir une suspension élastique de la molette sur son chariot. Par ailleurs, il est nécessaire de fabriquer avec une grande précision des gabarits mécaniques pour tous les objets à fabriquer que l'on doit monter sur la machine dont l'usage est donc peu souple.

On connaît également d'après FR-A-2 217 741 une commande de dispositif asservi. Ce document décrit un procédé d'enregistrement d'un programme de travail d'un dispositif asservi pour imiter les mouvements exécutés par l'opérateur de la machine, le programme étant mis en mémoire une fois pour toutes par l'exécution des opérations par l'opérateur lui-même. A cet effet, le procédé met en œuvre un vérin de travail qui est déplacé manuellement pendant l'opération d'enregistrement du programme conformément à une séquence désirée de mouvements devant être répétés dans le processus de travail automatique que doit exécuter la machine. Ce procédé n'est pas applicable au repoussage/fluotournage, car il serait impossible à un opérateur de fournir manuellement l'énergie destinée à appliquer l'outil sur l'ébauche à déformer.

Le DE-A-2 457 504 décrit une machine de fabrication de tubes cylindriques à section circulaire, à partir d'ébauches d'épaisseur relativement grande. A cet effet, l'ébauche montée sur un mandrin mobile en direction axiale de celle-ci est déplacée selon cette direction par rapport à un galet fixe formant outil, ce galet, en mordant dans l'épaisseur de l'ébauche, déformant celle-ci dans le sens de l'allongement.

L'avance du mandrin supportant l'ébauche est effectuée par un vérin dont l'effort, c'est-à-dire la pression d'actionnement, est asservi à une pression de référence fournie par un capteur différentiel. Le signal d'erreur engendré dans ce capteur est appliqué à un amplificateur qui régule soit la pression du vérin, soit la vitesse de rotation du mandrin. On tente ainsi d'obtenir une compensation des variations de dureté locales pouvant se présenter dans les ébauches.

Toutefois, cette compensation n'est que partiellement réalisée puisque la capsule de mesure du capteur différentiel en mesurant la pression dans la chambre du vérin détecte non seulement l'effort exercé par l'outil, mais également tous les efforts secondaires dus aux frottements et autres phénomènes parasites que le vérin doit vaincre et dont les grandeurs sont loin d'être négligeables, compte tenu des efforts considérables engendrés par le fluotournage. Ces efforts parasites ne sont pas constants et ont de plus une composante transversale importante qui se répercute sur les coussinets dans lesquels se déplace le mandrin.

Il est donc clair qu'à l'aide de l'enseignement du DE-A-2 457 504, on ne peut atteindre l'objectif qui est à la base de l'invention, à savoir de fournir une machine de repoussage/fluotournage pouvant être manœuvrée avec une grande précision aussi bien pour les passes de travail que pour les passes de finition, sans manipulations compliquées tout en étant par ailleurs facilement adaptable à une commande entièrement automatique pour l'exécution de pièces en série.

Un des objets de l'invention consiste en une machine de repoussage/fluotournage comportant un dispositif de mise en rotation d'un mandrin autour d'un axe horizontal, ce mandrin présentant le profil intérieur de la pièce à obtenir et étant destiné à coopérer avec un outil de travail qui est monté sur un chariot capable d'effectuer deux mouvements perpendiculaires entre eux, au moins le mouvement à peu près transversal de l'outil par rapport à la génératrice moyenne du mandrin étant commandé par une boucle d'asservissement reliée à l'organe de commande du dispositif moteur assurant ce mouvement transversal, ladite boucle d'asservissement comportant en tant que générateur de signal réel ou instantané au moins un capteur sensible à l'effort exercé par l'outil sur l'objet en cours de formage ainsi qu'un générateur de consigne représentant l'effort à exercer par l'outil, ladite machine étant caractérisée en ce que ledit capteur est monté dans le support même de l'outil et sensible aux déformations de ce support à l'effort exercé par l'outil et en ce que ledit générateur de consigne comporte des moyens pour faire varier de façon dynamique le signal de consigne au cours de chaque passe de travail de l'outil, constitués par un dispositif à actionnement manuel variable en continu.

Un autre objet de l'invention consiste en une machine pour le repoussage/fluotournage comportant un dispositif de mise en rotation d'un mandrin autour d'un axe horizontal, ce mandrin présentant le profil intérieur de la pièce à obtenir et étant destiné à coopérer avec un outil de travail qui est monté sur un chariot capable d'effectuer deux mouvements perpendiculaires entre eux, au moins le mouvement à peu près transversal de l'outil par rapport à la génératrice moyenne du mandrin étant commandé par une boucle d'asservissement reliée à l'organe de commande du dispositif moteur assurant ce mouvement transversal, ladite boucle d'asservissement comportant en tant que générateur de signal réel ou instantané au moins un capteur sensible à l'effort exercé par l'outil sur l'objet en cours de formage ainsi qu'un générateur de consigne représentant l'effort à exercer par l'outil, ladite machine étant caractérisée en ce que ledit capteur est monté dans le support même de l'outil et sensible aux déformations de ce support dues à l'effort exercé par l'outil et en ce que ledit générateur de consigne comporte des moyens pour faire varier de façon dynamique le signal de consigne au cours de chaque passe de travail de l'outil, constitués par un circuit de mémorisation et de commande dans lequel sont mémorisés des signaux de consigne destinés à être sélectivement appliqués à ladite boucle d'asservissement.

Grâce à ces caractéristiques, la boucle d'asservissement ne reçoit, en tant que signal réel, que l'effort réellement exercé sur l'objet en cours de formage, car tous les efforts parasites engendrés sur la mécanique couplant le vérin d'actionnement au support d'outil ne sont pas pris en compte. Il en résulte une précision de commande très élevée. Par ailleurs, le signal de consigne étant variable de façon dynamique, il devient possible de doser avec cette très grande précision l'effort de l'outil dans une plage allant d'une valeur nulle à la valeur maximale d'effort de l'outil pouvant être fournie par la machine, la boucle d'asservissement tendant à chaque instant à annuler le signal d'erreur résultant de la comparaison du signal de consigne et du signal réel et ce quelle que soit la valeur absolue de l'effort choisi au niveau du générateur de consigne. Ainsi, la plage de réglage peut aller de 0 à 2 000 kg par exemple.

L'invention permet également avec une grande souplesse de fonctionnement d'obtenir la possibilité de recopier des séries de pièces identiques, en faisant passer la machine tout d'abord par une phase manuelle dite « d'apprentissage » au cours de laquelle le générateur de consigne est commandé par l'opérateur pendant que les consignes sont mémorisées, après quoi la machine est capable de restituer elle-même ces valeurs au cours d'une phase de recopie pendant laquelle les pièces sont fabriquées en série.

L'invention est exposée ci-après plus en détail à l'aide de dessins représentant seulement un mode d'exécution, sur lesquels :

la figure 1 est une vue en perspective schématique d'un tour de repoussage suivant l'invention vue du côté arrière ;

la figure 2 représente une vue à plus grande échelle, d'un support de molette pour le tour de la figure 1 conçu suivant l'invention ;

la figure 3 représente une vue en élévation latérale de ce support et de la molette ;

la figure 4 est une vue en élévation et en coupe d'un boîtier de commande manuelle pouvant être utilisé avec le tour de l'invention ; et

la figure 5 est un schéma simplifié de la boucle d'asservissement utilisée dans le tour de la figure 1.

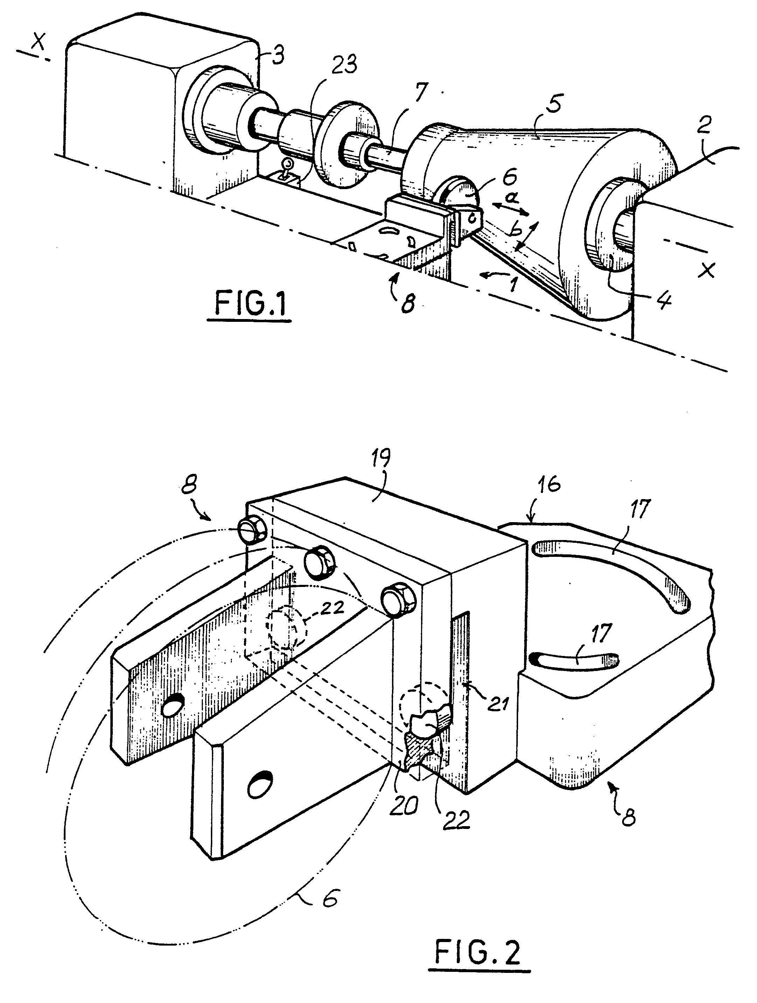

On a représenté sur la figure 1 un tour de repoussage d'axe X-X comprenant un banc 1, une poupée fixe 2 et une poupée mobile 3. Le mandrin 4 de la poupée fixe porte une forme 5 qui dans l'exemple représenté est tronconique, toute autre forme pouvant bien entendu être utilisée en fonction des pièces à fabriquer. Un outil 6 constitué par une molette coopère avec la forme 5 pour appliquer progressivement le matériau d'un flan de métal (non représenté) contre la forme 5, le flan étant serré entre la pointe 7 de la poupée mobile 3 et la face d'extrémité correspondante de la forme 5.

La molette 6 peut exécuter des mouvements selon deux directions a et b qui, dans le cas représenté sont perpendiculaires entre elles, la direction b étant à peu près parallèle à la génératrice moyenne de la forme 5.

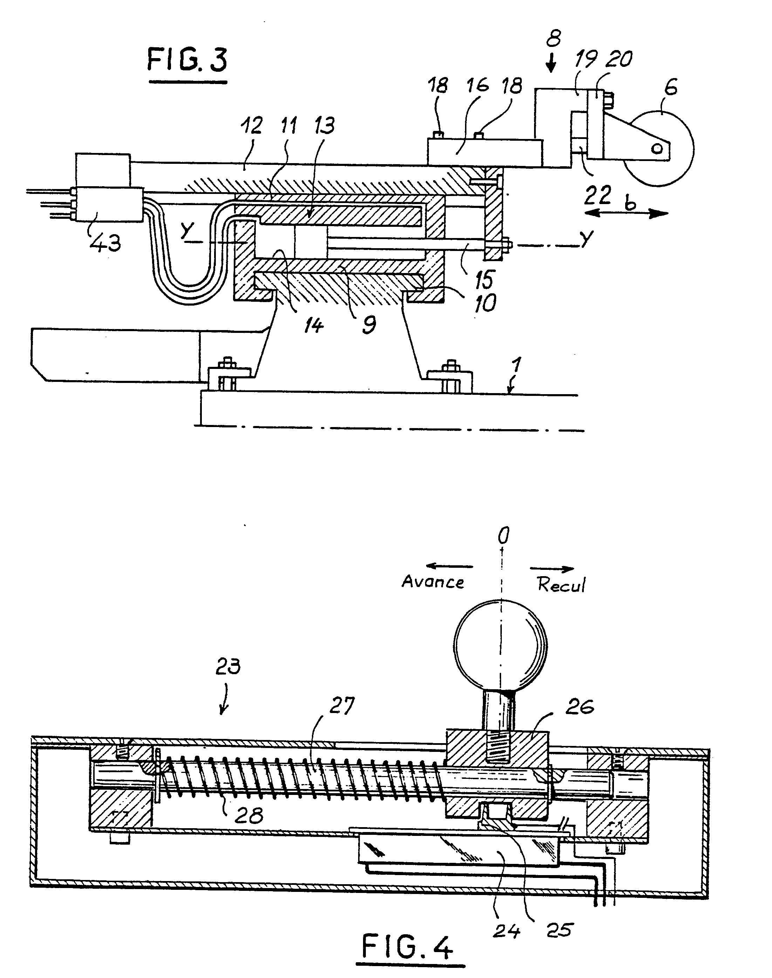

A cet effet, la molette est montée à rotation sur un support 8 porté par un chariot 9 monté coulissant sur une glissière 10 solidaire du banc 1 du tour (figure 3). Le chariot 9 constitue lui-même une glissière 11 sur laquelle peut se déplacer un second chariot, ce dernier exécutant les mouvements de l'outil selon la direction b.

Les mouvements du chariot 9 suivant la direction a sont commandés par un vérin (non représenté), tandis que les mouvements du chariot 12 sont commandés par un vérin 13 dont le cylindre 14, d'axe Y-Y, orienté selon la direction b reçoit un piston auquel est attachée une tige 15 solidaire du chariot 12 près du support 8.

La construction du support 8 apparaît clairement sur la figure 2. Il comporte une plaque de fixation 16 munie de boutonnières arquées 17 à travers lesquelles passent des vis de fixation 18 (non représentées sur la figure 2), cet agencement permettant ainsi un ajustement de l'attitude de la molette 6 par rapport à l'axe X-X du tour.

Une potence 19 est solidaire de la plaque de fixation 16 et porte une chape 20 qui n'est solidaire de la potence que par son bord supérieur laissant ainsi subsister entre elle et la potence un espace 21 dans lequel sont logés deux capteurs d'effort 22 placés à la même hauteur près des bords verticaux de l'âme de la chape 20. La molette 6 est montée rotative dans la chape 20.

La figure 4 montre un exemple d'un générateur de consigne 23 pour le fonctionnement manuel du tour. Ce générateur comporte un boîtier dans lequel est logé un potentiomètre 24. Le curseur 25 de celui-ci est solidaire d'un coulisseau 26 à bouton d'actionnement monté sur une tige 27 pouvant coulisser dans le boîtier. A partir de sa position zéro (position de la figure 4), le coulisseau 26 peut être déplacé vers la position d'effort maximal à l'encontre de l'action d'un ressort hélicoïdal 28 entourant la tige 27, ce ressort donnant à l'opérateur une sensation d'augmentation de l'effort sur la molette au fur et à mesure qu'il amène le curseur vers la position maximale (à gauche sur la figure 4). Le curseur 25 peut également être amené vers l'arrière pour provoquer le recul du chariot porte-molette 12, la tige 27 étant déplacée vers la droite de la figure 4 en coulissant dans ses supports. Bien entendu, le générateur 23 décrit et représenté n'est qu'un exemple, la même fonction pouvant être remplie par tout autre organe de commande analogue approprié.

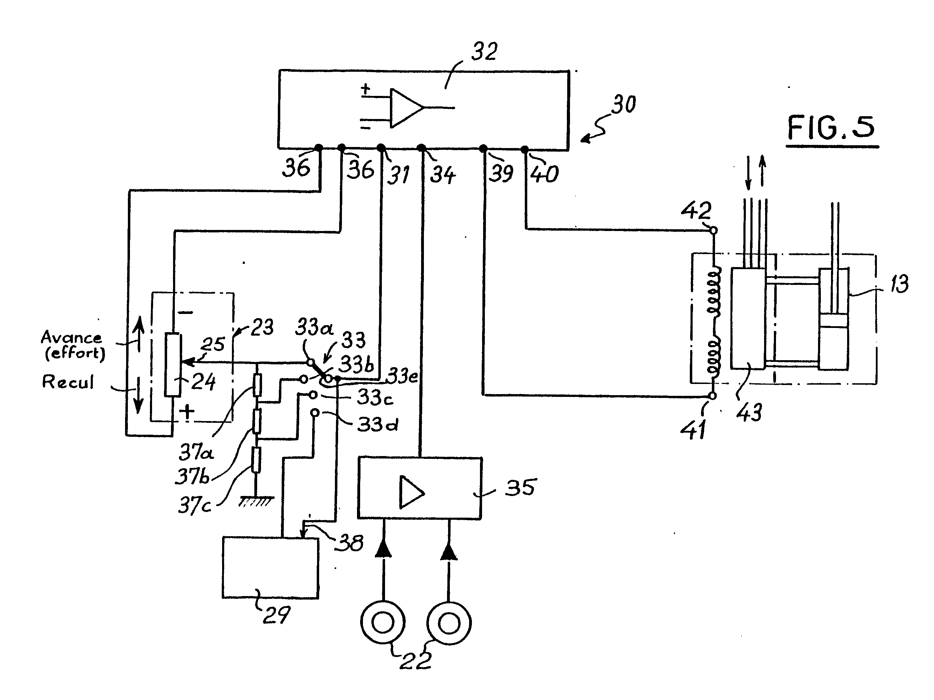

Le générateur de consigne 23 est associé à un circuit électronique de mémorisation et de commande 29 (figure 5) qui peut le remplacer lorsque le tour est réglé sur le mode automatique.

La figure 5 représente le schéma simplifié de la boucle d'asservissement 30 utilisée dans le tour suivant l'invention.

Le générateur 23 ainsi que le circuit 29 de mémorisation et de commande sont connectés à la première entrée 31 d'un amplificateur différentiel 32 qui peut être d'une conception classique, par l'intermédiaire d'un commutateur 33 sélecteur de modes de fonctionnement. La seconde entrée 34 de l'amplificateur 32 est reliée à un préamplificateur sommateur 35 connecté aux capteurs d'effort 22 (figures 2 et 3). Le potentiomètre 24 est alimenté à partir des bornes 36 de l'amplificateur 32, tandis que son curseur 25 est connecté à une première borne 33a fixe du sélecteur 33. Les seconde et troisième bornes 33b et 33c de ce même sélecteur sont reliées aux prises intermédiaires respectives d'un diviseur de tension composé de trois résistances 37a, 37b et 37c et destiné à fixer la plage de réglage d'effort (grossière, moyenne, fine) en mode de fonctionnement manuel. La quatrième borne fixe 33d du sélecteur est reliée à la sortie du circuit 29 de mémorisation et de commande.

La borne mobile 33e du sélecteur est connectée à l'entrée 31 de l'amplificateur 32 et également à l'entrée de mémorisation 38 du circuit 29.

La sortie de puissance 39, 40 de l'amplificateur 32 est reliée aux bobines de commande 41 et 42 d'une électro-vanne asservie 43 à travers laquelle est alimenté le vérin 13 avec un débit et le sens d'écoulement du fluide déterminés en fonction des signaux appliqués sur l'amplificateur différentiel 32.

Le fonctionnement du tour que l'on vient de décrire est le suivant.

Au début, le coulisseau 25 est amené vers l'arrière (vers la droite sur la figure 4), la tige 27 étant également dans sa position reculée sans que le ressort 28 puisse la déplacer vers l'avant. Le coulisseau 25 reste donc pour le moment dans la position arrière. Dans ces conditions, une tension positive maximale est appliquée à la boucle d'asservissement et de ce fait le chariot 12 se trouve en position reculée contre ses butées mécaniques (non représentées).

Après montage d'une forme et d'un flan sur le tour, il suffit d'avancer le curseur 25 vers la position zéro (en déplaçant le coulisseau 26 vers la gauche sur la figure 4) puis en continuant, le vérin 13 est alimenté pour déplacer le chariot 12 vers l'avant. En effet, dans ces conditions, la molette 6 ne se voyant opposer aucune résistance à la progression transversale selon la flèche b (figure 1), les capteurs 22 ne fournissent pas encore de signal et l'amplificateur 32 produit un signal de différence dont la valeur dépend de la distance sur laquelle le coulisseau 26 a été déplacé, valeur qui en définitive commande le débit dans le vérin 13 et donc la vitesse de déplacement de la molette 6, par l'intermédiaire de la vanne asservie 43.

Dès que la molette 6 rencontre une résistance par sa mise en contact avec le flan à travailler, il se produit une très légère déformation de l'âme de la chape 20, ce qui se traduit par la production d'un signal d'effort ou de poussée instantané sur la borne de sortie de l'amplificateur sommateur 35, signal qui est engendré par les capteurs 22. Ceux-ci délivrent une information en pico-Coulomb qui est transformée en une tension variant dans une plage de 0 à 10 V par exemple, à la sortie de l'amplificateur 35, en fonction de la résistance rencontrée par la molette 6.

Si l'opérateur ne déplace pas le coulisseau 26, un équilibre de la boucle d'asservissement est atteint lorsque la poussée exercée par la molette correspond à la position choisie de ce coulisseau 26.

Par contre, si l'opérateur avance ce dernier davantage, la boucle est de nouveau déséquilibrée et le système cherche un nouvel état d'équilibre moyennant une poussée plus forte de la molette 6 sur la pièce. Bien entendu, simultanément, l'opérateur peut provoquer le déplacement longitudinal de la molette selon la flèche a.

On constate donc qu'à tout instant, le signal de consigne demandé par le générateur 23 est transformé en une poussée correspondante de la molette sur la pièce à former, le travail de l'opérateur étant facilité par le fait que le générateur 23 lui fournit par le ressort 27 la sensation d'effectuer lui-même la poussée sur la molette à un coefficient d'amplification considérable près, bien entendu. Il est surtout essentiel de noter que la mesure effectuée par les capteurs 22 ne tient nullement compte de tous les efforts parasites qui sont engendrés au niveau du coulisseau 11 du chariot portant le support 8 de sorte que la précision de cette mesure est très élevée.

Le fonctionnement manuel que l'on vient de décrire peut être utilisé pour une ou plusieurs pièces à fabriquer, mais conformément à l'invention, il est également possible de mémoriser toutes les valeurs de consigne engendrées au cours d'un cycle de travail donné dans le circuit 29 de mémorisation et de commande pour ensuite restituer ces valeurs pour la fabrication ultérieure de pièces identiques.

C'est à cet effet que le circuit 29 est connecté par sa sortie à la borne 33d du sélecteur 33 par l'intermédiaire duquel il peut être branché sur l'entrée de consigne 31 de l'amplificateur différentiel 32. Le circuit 29 de mémorisation et de commande peut être réalisé de différentes façons. Par exemple et avantageusement, il peut être constitué par un microprocesseur convenablement programmé pour agir sur la boucle d'asservissement 30 et également et avantageusement pour exécuter d'autres fonctions du tour telles que par exemple la commande du mouvement longitudinal de la molette, la commande du moteur d'entraînement du tour, l'actionnement de la poupée mobile, le contrôle de certains paramètres, etc.

Au cours du fonctionnement manuel, l'opérateur peut choisir plusieurs gammes de poussées allant de 0 kg à une valeur de poussée maximale. A titre d'exemple et pour fixer les idées seulement, les trois premières positions du sélecteur 33 peuvent correspondre aux plages de réglage suivantes :
— borne 33a : 0 à 2 000 kg
— borne 33b : 0 à 1 320 kg
— borne 33c : 0 à 666 kg

Bien entendu, l'invention n'est pas limitée au mode de réalisation décrit ci-dessus. Par exemple, une boucle d'asservissement analogue à celle utilisée pour le mouvement transversal de la molette peut être employée pour le mouvement longitudinal. Par ailleurs, pour la programmation du mode de fonctionnement automatique, il est possible d'utiliser des montages à relais et potentiomètres fournissant des signaux de consigne à l'amplificateur 30 dans un ordre donné en fonction d'un programme pré-établi.

On voit donc que grâce à l'invention, on élimine les inconvénients des dispositifs de repoussage de la technique antérieure, le tour suivant l'invention permettant de régler et de contrôler très précisément l'effort de travail de la molette 6 dans plusieurs plages de réglage à partir d'un effort nul jusqu'à la valeur maximale prévue dans la plage sélectionnée. Ainsi, on peut exécuter sur la même machine des travaux d'ébauchage et de finition sur des matériaux à duretés très variées, tels que l'acier inoxydable, l'acier au carbone, l'aluminium, etc, et à épaisseurs également très variées.

En outre, aucun gabarit mécanique n'est nécessaire pour le fonctionnement en tour automatique.

Enfin, bien que dans la description qui précède, on utilise une molette pour travailler les pièces, les spécialistes comprendront que l'on peut utiliser d'autres outils, tels que par exemple un « brunissoir », une boule ou autre.

**Revendications**

1. Machine pour le repoussage/fluotournage comportant un dispositif (2) de mise en rotation d'un mandrin (4) autour d'un axe horizontal (X-X), ce mandrin (4) présentant le profil intérieur de la pièce à obtenir et étant destiné à coopérer avec un outil de travail (6) qui est monté sur un chariot (9) capable d'effectuer deux mouvements perpendiculaires (a, b) entre eux, au moins le mouvement à peu près transversal (b) de l'outil (6) par rapport à la génératrice moyenne du mandrin étant commandé par une boucle d'asservissement (30) reliée à l'organe de commande (43) du dispositif moteur (13) assurant ce mouvement transversal, ladite boucle d'asservissement (30) comportant en tant que générateur de signal réel ou instantané au moins un capteur (22) sensible à l'effort exercé par l'outil (6) sur l'objet en cours de formage ainsi qu'un générateur de consigne (23, 29) représentant l'effort à exercer par l'outil (6), ladite machine étant caractérisée en ce que ledit capteur (22) est monté dans le support (8) même de l'outil (6) et sensible aux déformations de ce support dues à l'effort exercé par l'outil et en ce que ledit générateur de consigne (23, 29) comporte des moyens pour faire varier de façon dynamique le signal de consigne au cours de chaque passe de travail de l'outil (6), constitués par un dispositif (23) à actionnement manuel variable en continu.

2. Machine pour le repoussage/fluotournage comportant un dispositif (2) de mise en rotation d'un mandrin (4) autour d'un axe horizontal (X-X), ce mandrin (4) présentant le profil intérieur de la pièce à obtenir et étant destiné à coopérer avec un outil de travail (6) qui est monté sur un chariot (9) capable d'effectuer deux mouvements perpendiculaires (a, b) entre eux, au moins le mouvement à peu près transversal (b) de l'outil (6) par rapport à la génératrice moyenne du mandrin étant commandé par une boucle d'asservissement (30) reliée à l'organe de commande (43) du dispositif moteur (13) assurant ce mouvement transversal, ladite boucle d'asservissement (30) comportant en tant que générateur de signal réel ou instantané au moins un capteur (22) sensible à l'effort exercé par l'outil (6) sur l'objet en cours de formage ainsi qu'un générateur de consigne (23, 29) représentant l'effort à exercer par l'outil (6), ladite machine étant caractérisée en ce que ledit capteur (22) est monté dans le support (8) même de l'outil (6) et sensible aux déformations de ce support dues à l'effort exercé par l'outil et en ce que ledit générateur de consigne (23, 29) comporte des moyens pour faire varier de façon dynamique le signal de consigne au cours de chaque passe de travail de l'outil (6), constitués par un circuit de mémorisation et de commande (29) dans lequel sont mémorisés des signaux de consigne destinés à être sélectivement appliqués à ladite boucle d'asservissement (30).

3. Machine suivant la revendication 1 ou 2, caractérisée en ce que le support (8) de l'outil de travail (6) comporte un dispositif de montage en forme de potence (16, 19) de la branche horizontale de laquelle est solidaire une chape (20) porte-outil par un bord seulement de son âme, et en ce que le ou lesdits capteurs (22) sensibles à l'effort exercé par l'outil (6) sont placés entre la branche verticale dudit dispositif de montage en forme de potence (16, 19) et la partie libre de l'âme de la chape (20).

4. Machine suivant l'une quelconque des revendications 1 et 2, caractérisée en ce qu'il est prévu un sélecteur (33) associé à des moyens (37a à 37c) pour appliquer à ladite boucle plusieurs plages de signaux de consigne.

5. Machine suivant la revendication 2, caractérisée en ce que ledit sélecteur (33) comporte une position supplémentaire permettant de brancher la boucle d'asservissement (30) soit sur le dispositif à actionnement manuel (23) soit sur le circuit (29) de mémorisation et de commande, ce dernier étant relié par son entrée de mémorisation à l'entrée de consigne (31) de ladite boucle (30) pour la mémorisation des signaux au cours d'un cycle de fonctionnement manuel de la machine.

6. Machine suivant l'une quelconque des revendications 1 à 5, caractérisée en ce que ledit dispositif d'actionnement manuel (23) comporte un potentiomètre (24) dont le curseur (25) est solidaire d'un organe de commande (26) rappelé dans une position de réglage zéro par un organe élastique (28) destiné à fournir une sensation d'effort à un opérateur au cours de la commande manuelle de la machine.

**Claims**

1. A spinning/fluoturning machine comprising a device (2) for rotating a mandrel (4) about a horizontal axis (X-X), this mandrel 4 having the inner profile of the workpiece to be produced and being adapted to cooperate with a working tool (6) which is mounted on a carriage (9) capable of moving in two directions (a, b) perpendicular to each other, at least the movement of the tool (6) which is roughly transverse (b) to the mean generatrix of the mandrel being controlled by a control loop (30) connected to the control element (43) of the driving device (13) which effects said transverse movement, said control loop (30) comprising, as a generator of a real or instantaneous signal, at least one sensor (22) responsive to the force exerted by the tool (6) on the workpiece in the course of the forming operation and a generator (23, 29) of a set value representing the force to be exerted by the tool (6), said machine being characterised in that said sensor (22) is mounted in the support (8) itself of the tool (6) and is responsive to deformations of this support due to the force exerted by the tool, and said set value generator (23, 29) comprises means for dynamically varying the set value in the course of each working pass of the tool (6), constituted by a continuously variable manually acting device (23).

2. A spinning/fluoturning machine comprising a device (2) for rotating a mandrel (4) about a horizontal axis (X-X), this mandrel 4 having the inner profile of the workpiece to be produced and being adapted to cooperate with a working tool (6) which is mounted on a carriage (9) capable of moving in two directions (a, b) perpendicular to each other, at least the movement of the tool (6) which is roughly transverse (b) to the mean generatrix of the mandrel being controlled by a control loop (30) connected to the control element (43) of the driving device (13) which effects said transverse movement, said control loop (30) comprising, as a generator of a real or instantaneous signal, at least one sensor (22) responsive to the force exerted by the tool (6) on the workpiece in the course of the forming operation and a generator (23, 29) of a set value representing the force to be exerted by the tool (6), said machine being characterised in that said sensor (22) is mounted in the support (8) itself of the tool (6) and is responsive to deformations of this support due to the force exerted by the tool, and said set value generator (23, 29) comprises means for dynamically varying the set value signal in the course of each working pass of the tool (6), constituted by a circuit (29) for storing in memory and controlling in which are stored set value signals adapted to be selectively applied to said control loop (30).

3. A machine according to claim 1 or 2, characterised in that the support (8) of the working tool (6) comprises a mount device in the form of a post (16, 19) having a horizontal branch connected to a yoke (20) carrying the tool merely by an edge of its web, and the sensor or sensors (22) responsive to the force exerted by the tool (6) are placed between the vertical branch of said mount device in the form of a post (16, 19) and the free part of the web of the yoke (20).

4. A machine according to any one of the claims 1 and 2, characterised in that there is provided a selector (33) associated with means (37a to 37c) for applying to said loop a plurality of ranges of set value signals.

5. A machine according to claim 2, characterised in that said selector (23) comprises an additional position permitting the connection of the control loop (30) to the manual actuating device (23) or to the storing and control circuit (29), the latter being connected by its storing input to the set value input (31) of said loop (30) for storing signals in the course of a manual operating cycle of the machine.

6. A machine according to any one of the claims 1 to 5, characterised in that said manual actuating device (23) comprises a potentiometer (24) whose slide (25) is connected to a control element (26) returned to a zero setting position by an elastic element (28) adapted to provide a sensation of force to an operator in the course of the manual control of the machine.

**Patentansprüche**

1. Maschine für das Drücken/Rolldrücken, mit einer Vorrichtung (2) zum In-Drehung-Versetzen eines Dorns (4) um eine horizontale Achse (X-X), wobei dieser Dorn (4) das Innenprofil des zu gewinnenden Teiles aufweist und für ein Zusammenwirken mit einem Bearbeitungswerkzeug (6) bestimmt ist, welches auf einem Schlitten (9) montiert ist, der in der Lage ist, zwei zueinander senkrechte Bewegungen (a, b) auszuführen, wobei wenigstens die bezüglich der mittleren Erzeugenden des Dorns etwa transversale Bewegung (b) des Werkzeugs (6) durch einen Regelkreis (30) geregelt wird, welcher mit dem Steuerorgan (43) der die transversale Bewegung liefernden Antriebsvorrichtung (13) verbunden ist, wobei der Regelkreis (30) als Istsignalerzeuger wenigstens einen auf die durch das Werkzeug (6) auf den Gegenstand während der Formung ausgeübte Kraft empfindlichen Sensor (22) sowie einen Erzeuger (23, 29) für den die durch das Werkzeug (6) auszuübende Kraft darstellenden Einstellwert aufweist, wobei die Maschine dadurch gekennzeichnet ist, daß der Sensor (22) im Träger (8) selbst für das Werkzeug (6) angebracht und auf Verformungen dieses Trägers infolge der durch das Werkzeug ausgeübten Kraft empfindlich ist, und daß der Einstellwerterzeuger (23, 29) Mittel zum dynamischen Verändern des Einstellwertsignals im Laufe eines jeden Bearbeitungsganges des Werkzeugs (6) aufweist, die durch eine Vorrichtung (23) mit kontinuierlich variabler manueller Betätigung gebildet sind.

2. Maschine für das Drücken/Rolldrücken, mit einer Vorrichtung (2) zum In-Drehung-Versetzen eines Dorns (4) um eine horizontale Achse (X-X), wobei dieser Dorn (4) das Innenprofil des zu gewinnenden Teiles aufweist und für ein Zusammenwirken mit einem Bearbeitungswerkzeug (6) bestimmt ist, welches auf einem Schlitten (9) montiert ist, der in der Lage ist, zwei zueinander senkrechte Bewegungen (a, b) auszuführen, wobei wenigstens die bezüglich der mittleren Erzeugenden des Dorns transversale Bewegung (b) des Werkzeugs (6) durch einen Regelkreis (30) geregelt wird, welcher mit dem Steuerorgan (43) der die transversale Bewegung liefernden Antriebsvorrichtung (13) verbunden ist, wobei der Regelkreis (30) als Istsignalerzeuger wenigstens einen auf die durch das Werkzeug (6) auf den Gegenstand während der Formung ausgeübte Kraft empfindlichen Sensor (22) sowie einen Erzeuger (23, 29) für den die durch das Werkzeug (6) auszuübende Kraft darstellenden Einstellwert aufweist, wobei die Maschine dadurch gekennzeichnet ist, daß der Sensor (22) im Träger (8) selbst für das Werkzeug (6) angebracht und auf Verformungen dieses Trägers infolge der durch das Werkzeug ausgeübten Kraft empfindlich ist, und daß der Einstellwerterzeuger (23, 29) Mittel zum dynamischen Verändern des Einstellwertsignals im Laufe eines jeden Bearbeitungsganges des Werkzeugs (6) aufweist, die durch eine Speicher- und Steuerschaltung (29) gebildet sind, in welcher für eine ausgewählte Aufgabe auf den Regelkreis (30) bestimmte Einstellwertsignale gespeichert sind.

3. Maschine nach Anspruch 1 oder 2, dadurch gekennzeichnet, daß der Träger (8) für das Bearbeitungswerkzeug (6) eine Montagevorrichtung in Form eines Auslegers (16, 19) aufweist, mit dessen Horizontalarm ein Werkzeugtragerbügel (20) nur über einen Rand seines Steges fest verbunden ist, und daß der oder die auf die durch das Werkzeug (6) ausgeübte Kraft empfindlichen Sensoren (22) zwischen dem Vertikalarm der Montagevorrichtung in Form eines Auslegers (16, 19) und dem freien Teil des Steges des Bügels (20) angeordnet sind.

4. Maschine nach irgendeinem der Ansprüche 1 und 2, dadurch gekennzeichnet, daß ein Mitteln (37a bis 37c) zur Aufgabe mehrerer Einstellwertbereiche auf den Regelkreis zugeordneter Selektor (33) vorgesehen ist

5. Maschine nach Anspruch 2, dadurch gekennzeichnet, daß der Selektor (33) eine zusätzliche Stellung aufweist, welche ein Anschließen des Regelkreises (30) entweder an die Vorrichtung mit manueller Betätigung (23) oder an den Regel- und Steuerkreis (29) gestattet, wobei letzterer für die Speicherung der Signale im Verlaufe eines manuellen Funktionszyklus der Maschine über seinen Speichereingang mit dem Einstellwerteingang (31) des Regelkreises (30) verbunden ist.

6. Maschine nach irgendeinem der Ansprüche 1 bis 5, dadurch gekennzeichnet, daß die Vorrichtung mit manueller Betätigung (23) ein Potentiometer (24) aufweist, dessen Abgriff (25) mit einem Steuerorgan (26) verbunden ist, welches in eine Null-Einstellungslage durch ein elastisches Element (28) rückgestellt wird, welches dazu bestimmt ist, einer Bedienungsperson im Verlaufe der manuellen Regelung der Maschine ein Gefühl für die Kraft zu geben.

FIG.1

FIG.2

0 057 136

FIG.3

FIG.4

2

FIG.5

Avance
(effort)

Recul

0 057 136